# EUROPEAN PATENT SPECIFICATION

(11) **EP 1 982 577 B1**
(45) Date of publication and mention of the grant of the patent: **29.06.2011**
(21) Application number: 07106548.6
(22) Date of filing: 19.04.2007
(51) Int. Cl.: A01G 3/033, A01G 3/06, B26B 15/00

(54) **Handle latch mechanism**
Griffverriegelungmechanismus
Mécanisme de verrouillage de poignée

(43) Date of publication of application: 22.10.2008
(73) Proprietor: Black & Decker, Inc., Newark, DE 19711 (US)
(72) Inventor: Maddison, Ian, Bishop Auckland, Co. Durham DL14 OTT (GB)
(74) Representative: Bell, Ian Stephen

(56) References cited:
- EP-A2- 0 679 476
- EP-B1- 1 498 232
- WO-A-2006/043197
- CH-A- 259 421
- DE-B- 1 260 847
- US-A- 2 638 669
- US-A- 2 964 846
- US-A- 5 353 504
- US-A- 5 375 330

## Description

The present invention concerns a latching mechanism for the handles of a power tool, wherein the power tool has at least a pair of handles, each handle comprising a respective actuator for operating the power tool and each of said handles is also provided with a respective guard member for restricting access to said respective actuator. Such a power tool is described in European patent no. EP 1 498 232 B, also in the name of the present applicant. This prior art document discloses a power tool having a pair of handles and a pair of jaws connected to said handles in a scissor-like arrangement, such that when the handles are opened, the jaws are caused to open thereby. Located between the jaws of this power tool is a cutting element, such as a cutting chain mounted on a support bar, in the manner of a chainsaw. Such an arrangement of jaws and cutting chain is found to be both highly effective and convenient for tasks such as cutting the branches of a tree, by using the handles of the power tool to guide the jaws thereof until a branch has been gripped between one of the jaws and the cutting chain, which then proceeds to cut the branch. The chain is driven to rotate by a motor of the power tool and each of the handles is provided with a respective actuator for operating the motor. The actuators and motor are wired together in such a way that the power tool can only be used in two-handed operation and the motor will only be activated to drive the chain when both actuators are operated by a user, remaining inactive if only one of the actuators is operated. Each of the handles has a respective guard member to restrict access to the respective actuator in order to prevent a user from activating the motor by accidentally operating both actuators simultaneously, for example by balancing the handles of the power tool against something else which operates both actuators, whilst using his or her hands to adjust the cutting chain.

Such an arrangement of handles, actuators and guard members is found to be extremely safe in controlling correct usage of the power tool. However, the handles are still free to open and close freely, which may lead to the jaws being opened to expose the cutting chain at undesired times, for example during storage or transportation of the power tool. It would therefore be desirable to provide such a power tool with some sort of latching mechanism for latching the handles together in order to prevent unwanted opening of the jaws. On the other hand, the latching mechanism must also not cause the handles to become latched together at unwanted times, for example when the power tool is being used to cut branches.

Latching mechanisms for latching together the handles of tools having a pair of handles with a scissor-like arrangement but without a respective actuator or a respective guard member for restricting access to the respective actuator on each handle are known, for example in secateurs, garden shears and scissors themselves. However, in such instances, latching of the handles is not impeded in any way by the presence on each handle of actuators and guard members. It is therefore an object of the present invention to provide a power tool which overcomes the problem of how to accommodate a handle latching mechanism in a power tool having a pair of handles each comprising a respective actuator for operating the power tool and a respective guard member for restricting access to said respective actuator. A further object of the invention is also to allow the handles to be latched together as desired, but without becoming latched together accidentally at unwanted times.

Accordingly, the present invention provides a power tool comprising at least a pair of handles, wherein each of the handles has (a) a respective actuator for operating said power tool; and (b) a respective guard member for restricting access to said respective actuator; the power tool further comprising a latch mechanism for latching the pair of handles together, wherein the latch mechanism has a first component mounted on a first one of said guard members and a second component mounted on a second one of said guard members, which said second component is adapted to engage with said first component. Thus, the components of the latch mechanism are mounted on the respective guard members for the actuators, rather than directly on the handles themselves. This ensures that the components of the latch mechanism are able to latch the handles together without being impeded by the presence of the guard members or the actuators.

In a preferred embodiment, the latch mechanism further comprises user-operable means for holding the latch mechanism either in a latched condition or in an unlatched condition but not otherwise, such that the latch mechanism has only a first stable configuration which is the latched condition and a second stable configuration which is the unlatched condition. This ensures that the handles can be latched together as desired by the user, but without becoming latched together accidentally at unwanted times or alternatively becoming unlatched accidentally.

Further features and advantages of the present invention will be better understood by reference to the following description, which is given by way of example and in association with the accompanying drawings, in which:
Fig. 1 is an isometric view of a power tool comprising a handle latch mechanism according to an embodiment of the invention, shown with the handles of the power tool slightly apart and the latch mechanism in the unlatched position;
Fig. 2 is an isometric view of the power tool of Fig. 1, shown with the handles thereof closed and the latch mechanism in the unlatched position;
Fig. 3 is a side elevational view of the power tool of Fig. 1, shown with the handles thereof slightly apart and the latch mechanism in the unlatched position;
Fig. 4 is close-up perspective view of the handle latch mechanism on the power tool of Fig. 1, shown in the unlatched position;
Fig. 5 is a side elevational view of the handle latch mechanism of Fig. 4, shown with the handles of the power tool slightly apart and the latch mechanism in the unlatched position;
Fig. 6 is a cross-sectional view through the handle latch mechanism of Fig. 4, shown with the handles of the power tool closed and the latch mechanism in the unlatched position;
Fig. 7 is a cross-sectional view through the handle latch mechanism of Fig. 4, shown with the handles of the power tool closed and the latch mechanism in the latched position;
Figs. 8A, 8B, 8C, 8D and 8E are respectively top plan, front elevational, side elevational, rear elevational and underneath plan views of a component of the latch mechanism of Fig. 4; and
Figs. 9A, 9B and 9C are isometric three-quarter views respectively viewed from below, above and obliquely of the component of Figs. 8A to 8E.

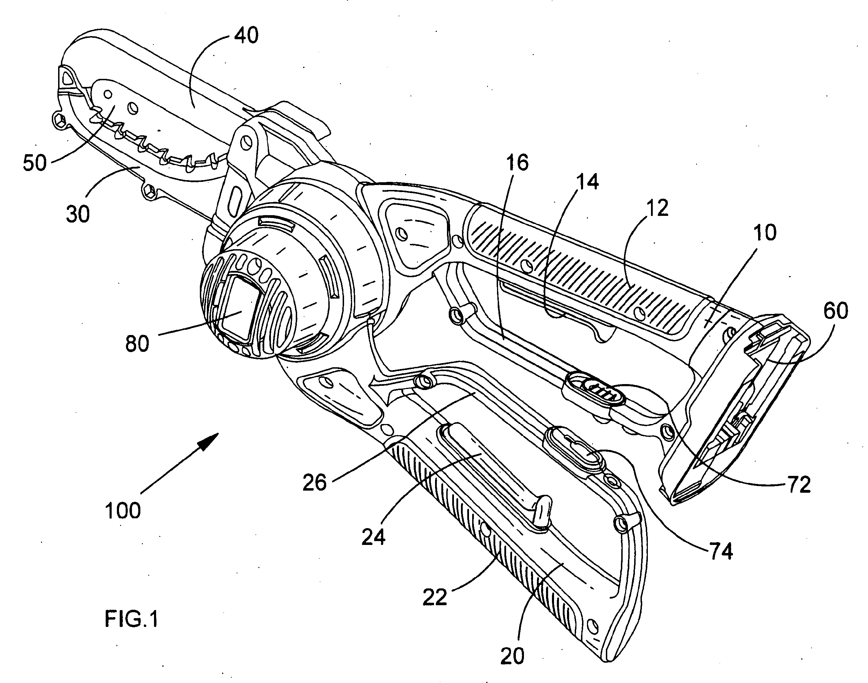

Turning firstly to Fig. 1, there is shown a power tool 100 having a handle latch mechanism according to an embodiment of the invention. The power tool has a pair of handles 10, 20 and a pair of jaws 30, 40 connected to the handles in a scissor-like arrangement. The jaws 30, 40 enclose a support bar 50, on which is mounted a cutting chain (not visible in the drawings). The cutting chain is driven by a motor contained within a motor housing 80 mounted on power tool 100 coaxially with the pivot axis of the handles 10, 20 and jaws 30, 40. Motive power for the motor is provided by a battery pack which can be inserted into a battery pack receiving portion 60 of power tool 100. Each of the handles 10, 20 has a respective gripping portion 12, 22 for a user to hold the handles by and a respective actuator 14, 24 to operate the motor. Thus a user may grasp each respective gripping portion 12, 22 in the palms of their hands and apply pressure to each respective actuator 14, 24 with their fingers, whilst using their thumbs to orient the handles as desired. Each respective actuator 14, 24 is surmounted by a guard member 16, 26, which prevents an external object which approaches either handle towards either actuator from contacting the respective actuator and accidentally activating the motor.

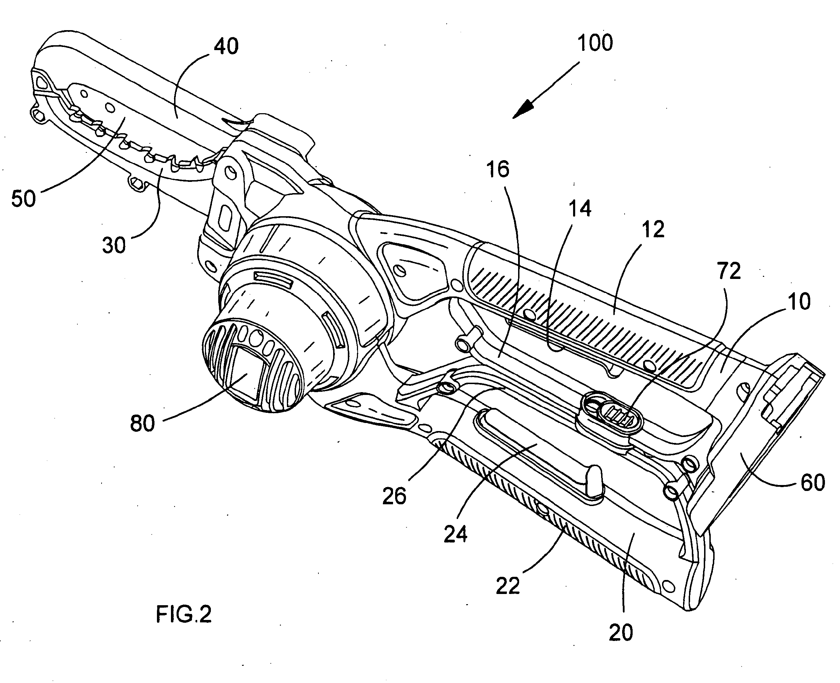

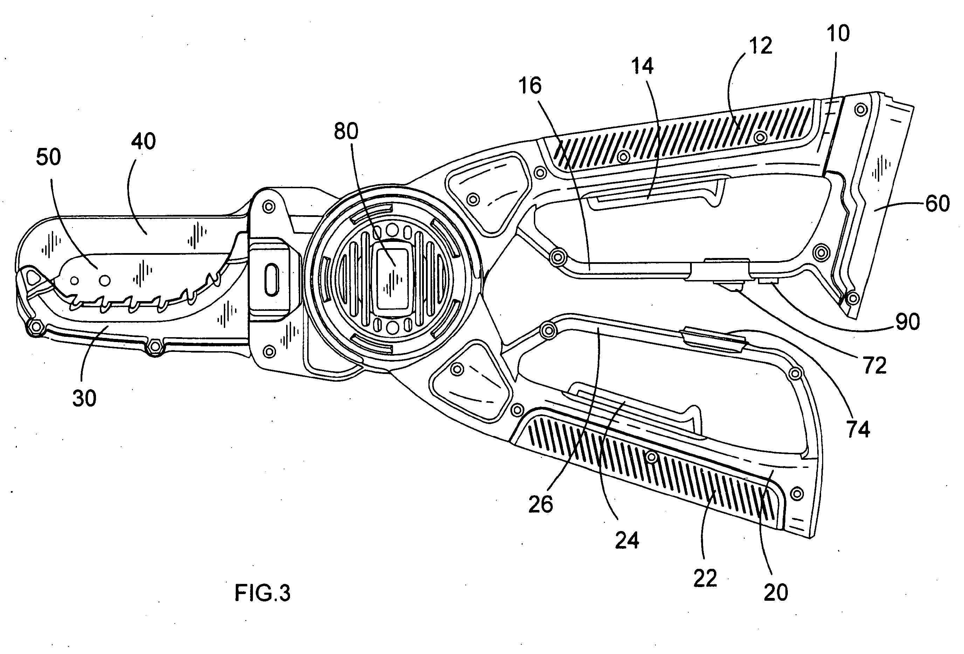

Fig. 1 shows the power tool 100 with its handles slightly apart so as to reveal the latch mechanism 72, 74, which is shown in its unlatched position. The latch mechanism comprises a first component 72 mounted on a first one 16 of the guard members and a second component 74 mounted on a second one 26 of the guard members. The second component 74 is adapted to engage with the first component 72 in a manner to be described in greater detail below. Fig. 2 shows the same power tool 100, but with its handles now closed in order to demonstrate the engagement of first component 72 with second component 74. The side view of Fig. 3 further shows power tool 100 in a side view, which reveals a resilient buffer 90 made of rubber of a similar elastomeric material mounted on one of the guard members 16. Buffer 90 allows the handles to be brought together without guard members 16, 26 clashing, and the first component 72 of the latch mechanism to engage smoothly with the second component 74. A comparison of Figs. 1 and 2 with Fig. 3 also shows that the first component 72 of the latch mechanism passes completely through a bore formed in guard member 16 from a side thereof facing actuator 14 to a side thereof facing the other guard member 26.

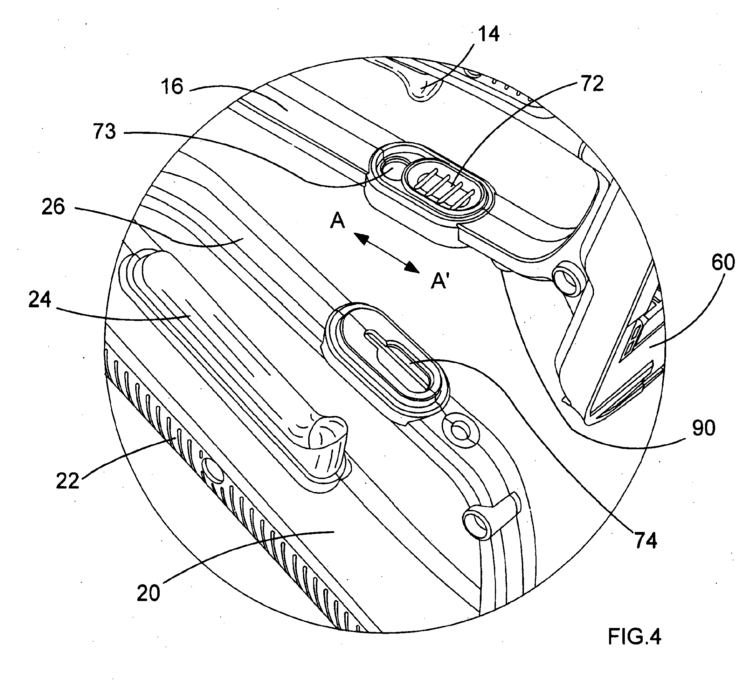

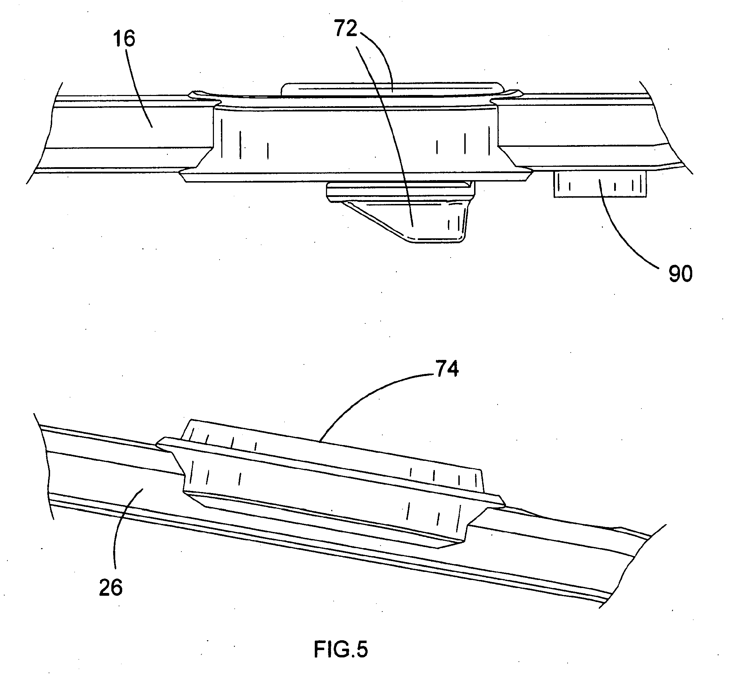

Fig. 4 shows a close-up view of the handle latch mechanism, revealing bore 73 in which first component 72 is slidable back and forth in the directions indicated by the double-headed arrow labelled A-A'. Fig. 4 also shows that second component 74 comprises a hole for receiving a part of first component 72. The side view of Fig. 5 further shows how first component 72 passes completely through bore 73 formed in guard member 16.

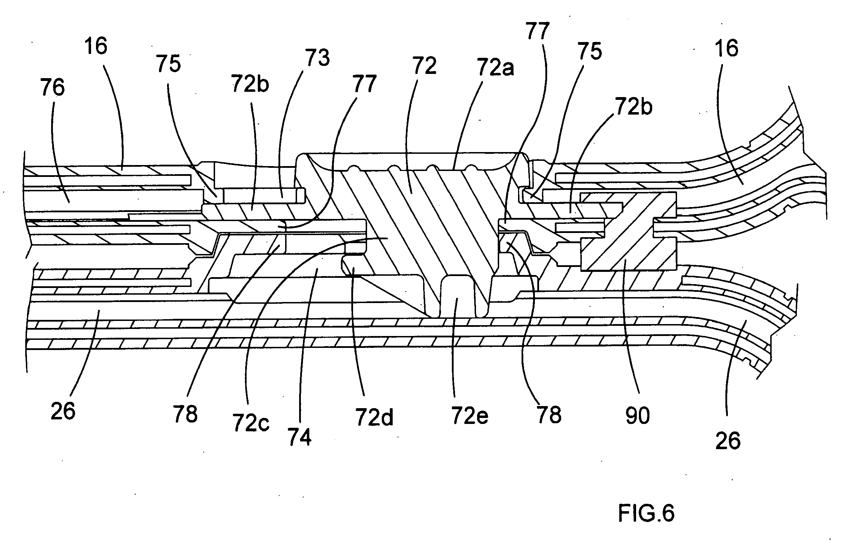

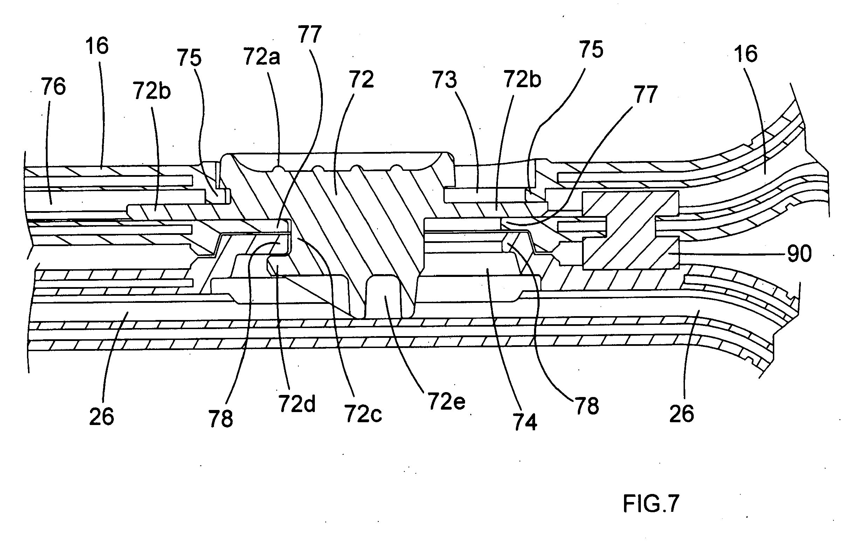

The operation of the latching mechanism will now be described with reference to Figs. 6 and 7. Firstly referring to Fig. 6, it may be seen that the first component 72 of the latch mechanism comprises a thumb plate 72a, a flange 72b, a neck 72c and a foot having a toe 72d and a heel 72e. Flange 72b is slidable in the manner indicated above in relation to Fig. 4 within a channel 76 formed longitudinally within guard member 16 between extremities defined by an upper lip 75 and a lower lip 77 respectively formed around the periphery of each end of bore 73. Thumb plate 72a allows a user to push first component 72 backwards and forwards in the directions of arrow A-A'. When the handles 10, 20 of the power tool are closed such that first guard member 16 is brought towards second guard member 26 until buffer 90 mounted on first guard member 16 comes into contact with second guard member 26, the foot of the first latch component 72 passes into the hole 74 of the second latch component until the heel 72e thereof contacts the bottom of hole 74 in the manner illustrated in Fig. 6. However, this is not sufficient to latch the two guard members 16, 26 together. As may be seen by referring back to Fig. 4, the mouth of hole 74 comprises both a larger portion through which the foot of first component 72 can pass and a smaller portion through which only neck 72c but not the foot of first component 72 is able to pass. Thus if a user utilizes thumb plate 72a to slide component 72 in the direction of arrow A in Fig. 4 from the position shown in Fig. 6, neck 72c passes into the smaller portion of hole 74 and the foot of component 72 becomes trapped underneath, and the latch mechanism adopts the configuration shown in Fig. 7. In this state, toe 72d of component 72 is located under a lip 78 formed around the periphery of hole 74, and one end of neck 72c abuts against a side of lip 78 in the region of the smaller portion of hole 74. The passage of toe 72d under lip 78 then prevents guard member 16 from being moved apart from guard member 26, since the foot of component 72 is too large to pass through this smaller portion of hole 74, and the two handles 10, 20 are latched together. On the other hand, sliding component 72 in the direction of arrow A' returns the latch mechanism to the configuration shown in Fig. 6, allowing the foot of component 72 to be withdrawn through the larger portion of hole 74 once again, thereby unlatching the handles. Thus, a user can select whether to latch the handles together or leave them unlatched by using thumb plate 72a to slide component 72 into the latched and unlatched positions, as desired. Furthermore, the fact that the latch mechanism is operable to slide back and forth in directions (as indicated by arrow A-A') which are orthogonal to the directions of operation of actuators 14, 24 ensures that the risk of accidental operation of the actuators when a user is operating the latch mechanism is minimized, as is the risk of accidentally operating the latch mechanism when a user is operating the actuators.

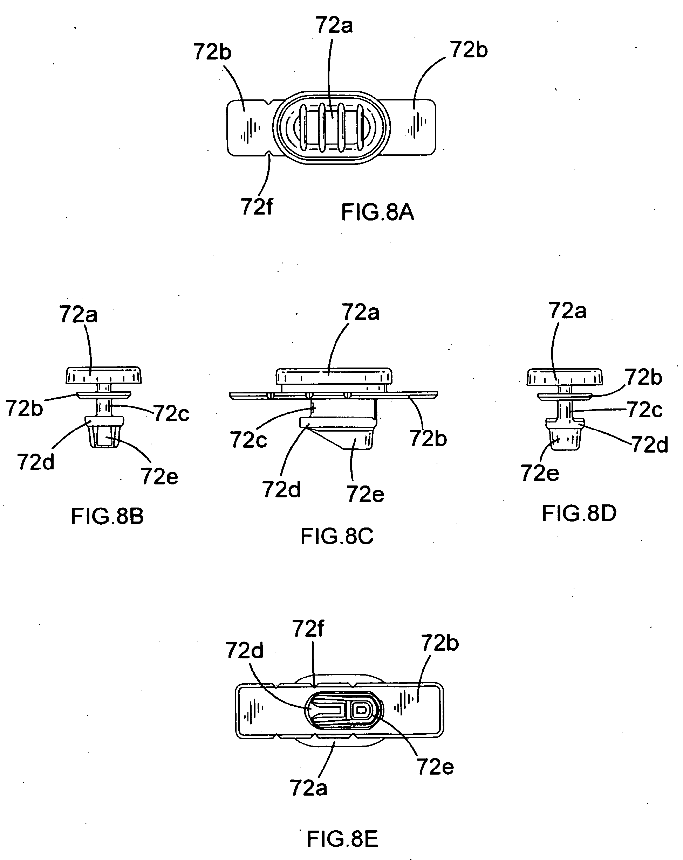

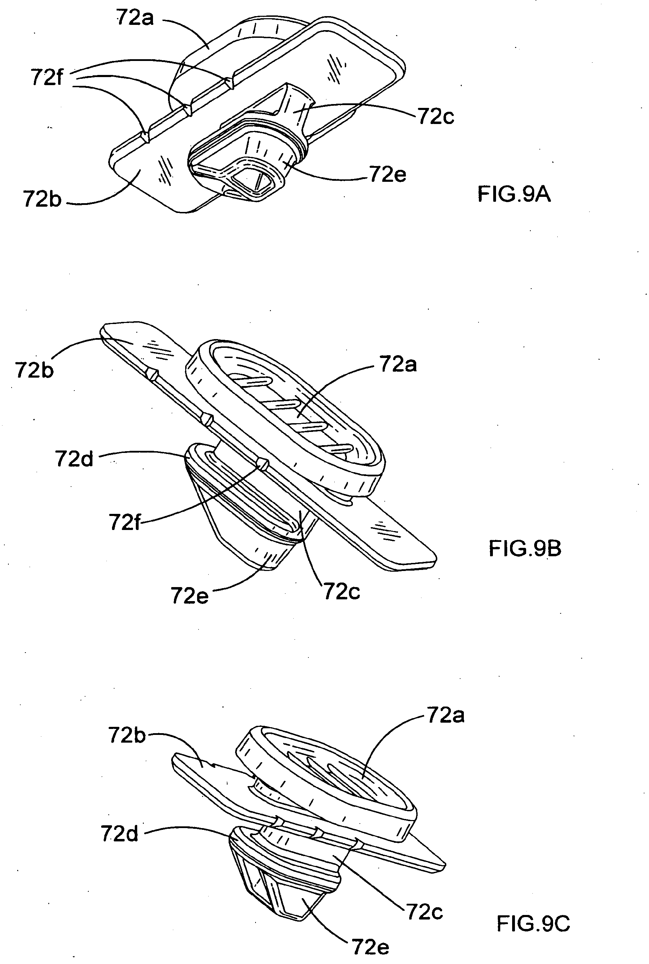

In order to ensure that the latch mechanism remains in the latched or unlatched configuration selected by a user, flange 72b of component 72 is provided with a plurality of small indentations or notches 72f formed at regular intervals along each long edge of flange 72b. These notches may best be seen in the underneath plan view of component 72 shown in Fig. 8E, as well as in the three-quarter views of Figs. 9A, 9B and 9C. Notches 72f engage with a plurality of corresponding ribs formed at regular intervals within guard member 16 along either side of channel 76. In the embodiment of component 72 depicted in Figs. 8A to 9C, flange 72b has three notches 72f formed along either side thereof. These notches and the ribs formed along either side of channel 76 are so spaced that when component 72 is in the unlatched configuration shown in Fig. 6, the central notch on each side of flange 72b, as well as the notch at the end of each side of the flange, is engaged with a corresponding rib, whereas when component 72 is in the latched configuration shown in Fig. 7, all three notches on each side of flange 72b are engaged with a corresponding rib. However, the notches and ribs are also so spaced that they fail to engage with each other when component 72 is in any other position. Thus component 72 is held in the latched or unlatched positions by the interengagement of the notches 72f with the ribs formed along either side of channel 76, but not otherwise, and the latch mechanism is held in the latched or unlatched configuration selected by the user. On the other hand, the latch mechanism cannot move from the latched or unlatched position without a user applying sliding pressure to thumb plate 72a in order to overcome the resistance of the long edges of flange 72b at locations between notches 72f to the ribs formed along either side of channel 76. It is a notable feature of this embodiment therefore that the latch mechanism just described is not designed to be biased into a latched or unlatched configuration, for example by the presence of a spring, which could otherwise cause the handles 10, 20 to become latched together accidentally at unwanted times.

Figs. 8A to 9C also show how the underside of component 72 is sloped from toe 72d towards heel 72e relative to the planes of thumb plate 72a and flange 72b. This slope helps to guide the foot of component 72 into the larger portion of hole 74 in the event of a slight misalignment of handles 10, 20 when the handles are brought together.

It should also be mentioned that whereas the above embodiment has been described by reference to the first component 72 of the latch mechanism being mounted on a first one of the guard members 16 and the second component 74 being mounted on a second one of the guard members 26, the first component 72 could instead be mounted on the second guard member 26 and the second component 74 could instead be mounted on the first guard member 16. Equally, buffer 90 could just as well be mounted on the second guard member 26 rather than the first guard member 16, and there is no interdependency between which of the two guard members the components 72, 74 on the one hand and the buffer 90 on the other are mounted.

## Claims

1. A power tool comprising:
at least a pair of handles (10, 20), wherein each of said handles has:
(a) a respective actuator (14, 24) for operating said power tool; and
(b) a respective guard member (16, 26) for restricting access to said respective actuator;
**characterized by**:
a latch mechanism (72, 74) for latching said pair of handles (10, 20) together, said latch mechanism having a first component (72) mounted on a first one (16) of said guard members and a second component (74) mounted on a second one (26) of said guard members, which second component (74) is adapted to engage with said first component (72).

2. A power tool according to claim 1, wherein the latch mechanism further comprises user-operable means (72a, 72f) for holding the latch mechanism in either a latched condition or in an unlatched condition but not otherwise, such that said latch mechanism has only a first stable configuration being the latched condition and a second stable configuration being the unlatched condition.

3. A power tool according to claim 1 or claim 2, wherein the latch mechanism is operable to slide back and forth along an axis (A-A') orthogonal to a direction of operation of said actuators (14, 24).

4. A power tool according to any one of the preceding claims, further comprising a resilient buffer (90) mounted on one (16) of said guard members in a location to contact the other (26) of said guard members when said handles are latched together.

5. A power tool according to any one of the preceding claims, wherein said first component (72) is mounted in and passes through a bore (73) formed in said first guard member (16) from a side thereof facing an actuator (14) of a first one of said handles (10) whereon said first guard member (16) is mounted to a side thereof facing said second guard member (26).

6. A power tool according to any one of the preceding claims, wherein:
said first component (72) comprises a thumb-plate (72a), a flange (72b) oriented parallel to said thumb plate, a neck (72c) depending from said flange and a foot having a toe (72d) and a heel (72e); and
said second component (74) comprises a hole for receiving said neck (72c) and said foot of said first component, said hole having a lip (78) formed around the periphery thereof for engagement with said toe (72d) in a latched condition of said latch mechanism.

7. A power tool according to claim 6 as dependent on claim 5, wherein said flange (72b) is slidable in a channel (76) formed longitudinally within said first guard member (16) between extremities defined by an upper lip (75) and a lower lip (77) respectively formed around the periphery of each end of said bore (73).

8. A power tool according to claim 7 as dependant on claim 2, wherein the user-operable means comprises said thumb-plate (72a), a notch (72f) formed in an edge of said flange (72b) and a rib formed in a side of said channel (76).

9. A power tool according to any one of claims 6 to 8, wherein said foot is sloped from said toe (72d) towards said heel (72e) relative to the planes of said thumb plate (72a) and said flange (72b).

## Patentansprüche

1. Elektrowerkzeug, das Folgendes umfasst: mindestens ein Paar von Griffen (10, 20), wobei jeder der Griffe besteht aus: (a) einem jeweiligen Auslöser (14, 24) zum Betätigen des Elektrowerkzeuges und (b) einem jeweiligen Schutzelement (16, 26),
um den Zugriff auf den jeweiligenAuslöser einzuschränken; **gekennzeichnet durch**:
einen Verriegelungsmechanismus (72, 74), um das Paar von Griffen (10, 20) zusammen zu verriegeln, wobei der Verriegelungsmechanismus eine erste Komponente (72),
angebracht auf einem ersten (16) der Schutzelemente, und eine zweite Komponente (74), angebracht auf einem zweiten (26) der Schutzelemente, hat, wobei die zweite Komponente (74) eingerichtet ist, um sich mit der ersten Komponente (72) zu verbinden.

2. Elektrowerkzeug nach Anspruch 1, wobei der
Verriegelungsmechanismus benutzer-betätigbare Mittel (72a, 72f) umfasst, um den Verriegelungsmechanismus entweder in einem verriegelten Zustand oder in einem geöffneten Zustand, aber nicht anderweitig, zu halten, so dass
der Verriegelungsmechanismus nur eine erste beständige Konfiguration, die des verriegelten Zustands, und eine zweite beständige Konfiguration, die des geöffneten Zustands, hat.

3. Elektrowerkzeug nach Anspruch 1 oder Anspruch 2, wobei der Verriegelungsmechanismus hin und her längs einer Achse A-A' verschiebbar ist, die senkrecht zur Richtung der Auslöser (14, 24) ist.

4. Elektrowerkzeug nach einem der vorherigen Ansprüche, des weiteren umfassend einen elastischen Puffer (90), angebracht auf einem (16) der Schutzelemente an einer Stelle, so dass das andere (26) der Schutzelemente berührt wird, wenn die Griffe zusammen verriegelt werden.

5. Elektrowerkzeug nach einem der vorherigen Ansprüche, wobei die erste Komponente (72) so angebracht ist, dass sie durch eine in dem
ersten Schutzelement geformte Bohrung (73) passt, von einer Seite desselben gegenüber einem Auslöser (14) eines ersten
der Griffe (10), auf dem das erste Schutzelement (16) angebracht ist, bis zu einer Seite desselben
gegenüber dem zweiten Schutzelement (26).

6. Elektrowerkzeug nach einem der vorherigen Ansprüche, wobei die erste Komponente (72) eine Daumenplatte (72a), einen dazu parallel ausgerichteten Flansch (72b), einen an dem Flansch hängenden Hals (72c) und einen Fuss mit einer Zehe (72d) und einer Ferse (72e) umfasst, und die zweite Komponente (74)
ein Loch, um den Hals (72c) und den Fuss der ersten
Komponente aufzunehmen, umfasst, wobei das Loch eine Lippe (78) hat, die um den Rand desselben geformt
ist, um sich in einem verriegeltem Zustand des Verriegelungsmechanismus mit dem Zeh (72d)
zu verbinden.

7. Elektrowerkzeug nach Anspruch 6 in Abhängigkeit von Anspruch 5,
wobei der Flansch (72b) verschiebbar ist in einer Führung (76), die longitudinal gebildet ist in dem ersten Schutzelement (16), zwischen Enden, definiert durch eine obere Lippe (75)
und eine untere Lippe (77), jeweils geformt um den Rand am jeweiligen Ende der Bohrung (73).

8. Elektrowerkzeug nach Anspruch 7 in Abhängigkeit von Anspruch 2,
wobei die benutzer-betätigbaren Mittel die Daumenplatte (72a), eine Kerbe (72f), die in einem
Rand des Flansches (72b) geformt ist, und eine Rippe, die in einer Seite der Führung (76) geformt ist, umfassen.

9. Elektrowerkzeug nach einem der Ansprüche 6 bis 8, wobei der Fuss vom Zeh (72d) zur Ferse (72e) hin abgeschrägt ist relativ zu den Flächen der Daumenplatte (72a) und des Flanschs (72b).

## Revendications

1. Outil électrique comprenant :
au moins une paire de poignées (10, 20), chacune desdites poignées ayant :
(a) un actionneur respectif (14, 24) pour faire fonctionner l'outil électrique ; et
(b) un élément de protection respectif (16, 26) pour limiter l'accès audits actionneurs ;
**caractérisé par** :
un mécanisme de verrouillage (72, 74) pour verrouiller lesdites deux poignées (10, 20) ensemble, constitué d'un premier composant (72) monté sur un premier (16) desdits éléments de protection (16) et d'un second composant (74) monté sur un second (26) desdits éléments de protection (26), le second composant (74) étant adapté pour s'enclencher avec ledit premier composant (72).

2. Outil électrique selon la revendication 1, dans lequel le mécanisme de verrouillage comprend également des dispositifs pouvant être actionnés par l'utilisateur (72a, 72f) pour le maintenir en position verrouillée ou déverrouillée uniquement, de sorte que le mécanisme de verrouillage n'a qu'une première configuration stable, la position verrouillée, et une seconde configuration stable, la position déverrouillée.

3. Outil électrique selon la revendication 1 ou 2, dans lequel le mécanisme de verrouillage est actionnable pour coulisser vers l'arrière ou vers l'avant le long d'un axe (A-A') orthogonal au sens de fonctionnement desdits actionneurs (14, 24).

4. Outil électrique selon l'une quelconque des revendications précédentes, comprenant également une butée élastique (90) montée sur l'un (16) desdits éléments de protection à un endroit pouvant toucher l'autre (26) desdits éléments de protection lorsque lesdites poignées sont verrouillées ensemble.

5. Outil électrique selon l'une quelconque des revendications précédentes, dans lequel ledit premier composant (72) est monté dans, et traverse, un alésage (73) formé dans ledit premier élément de protection (16) depuis un côté de celui-ci situé face à un actionneur (14) d'une première desdites poignées (10) sur laquelle ledit premier élément de protection (16) est monté jusqu'à un côté de celui-ci situé face audit second élément de protection (26).

6. Outil électrique selon l'une quelconque des revendications précédentes, dans lequel :
ledit premier composant (72) comprend un poussoir (72a), une bride (72b) parallèle au poussoir, un collet (72c) dépendant de la bride et un support comportant une pointe (72d) et un appui (72e) ; et
ledit second composant (74) comprend un orifice pour recevoir ledit collet (72c) et ledit support dudit premier composant, ledit orifice ayant un rebord (78) formé autour de sa périphérie pour s'enclencher avec ladite pointe (72d) dans une position verrouillée dudit mécanisme de verrouillage.

7. Outil électrique selon la revendication 6 subordonnée à la revendication 5, dans lequel ladite bride (72b) peut coulisser dans une glissière (76) formée longitudinalement dans ledit premier élément de protection (16) entre des extrémités définies par un rebord supérieur (75) et un rebord inférieur (77), formés respectivement autour de la périphérie de chaque extrémité dudit alésage (73).

8. Outil électrique selon la revendication 7 subordonnée à la revendication 2, dans lequel les dispositifs pouvant être actionnés par l'utilisateur comprennent ledit poussoir (72a), un cran (72f) formé dans un bord de ladite bride (72b) et une nervure formée dans un côté de ladite glissière (76).

9. Outil électrique selon l'une des revendications 6 à 8, dans lequel ledit support est incliné de ladite pointe (72d) vers ledit appui (72e) par rapport aux plans dudit poussoir (72a) et de ladite bride (72b).
